# EUROPÄISCHE PATENTSCHRIFT

(11) **EP 4 648 396 B1**
(45) Veröffentlichungstag und Bekanntmachung des Hinweises auf die Patenterteilung: **27.05.2026**
(21) Anmeldenummer: 24174372.3
(22) Anmeldetag: 06.05.2024
(51) Int. Cl.: H04M 3/22, H04L 65/80, H04M 7/00

(54) **TECHNIKEN ZUR WIEDERHERSTELLUNG EINER TELEFONVERBINDUNG MIT ZUFRIEDENSTELLENDER SPRACHQUALITÄT FÜR NUTZER**
TECHNIQUES FOR RECOVERING A TELEPHONE CALL WITH SATISFACTORY VOICE QUALITY FOR USERS
TECHNIQUES DE RÉTABLISSEMENT D'UNE CONNEXION TÉLÉPHONIQUE AVEC QUALITÉ VOCALE SATISFAISANTE POUR LES UTILISATEURS

(43) Veröffentlichungstag der Anmeldung: 12.11.2025
(73) Patentinhaber: Deutsche Telekom AG, 53113 Bonn (DE)
(72) Erfinder: MINOW, Jascha, Bensheim (DE); JAHN, Carl, Wiesbaden (DE); EL MALLOUKI, Said, St. Goar (DE)
(74) Vertreter: karo IP

(56) Entgegenhaltungen:
- EP-A1- 3 182 647
- US-A1- 2017 339 535

## Beschreibung

Die vorliegende Erfindung betrifft das technische Gebiet von Voice-Over-IP (VoIP) Sprachanruf und insbesondere Techniken, wie deren Sprachqualität sichergestellt bzw. wieder erhöht werden kann.

Auch heutzutage kommt es immer noch vor, dass während eines Sprachanrufs Störungen auftreten. Ein solcher Sprachanruf umfasst sowohl herkömmliche Telefonie, VoIP Telefonie als auch Sprachanruf mittels Apps. Diese Störungen haben dann die Folge, dass sich Gesprächspartner nicht mehr oder nur noch sehr schlecht verstehen. Dies führt in der Regel dazu, dass das Gespräch nur erschwert oder gar nicht stattfindet und unterbrochen werden muss.

Ein solcher Gesprächsabbruch ist in der Regel wenig benutzerfreundlich und frustrierend. Es kann sogar der Fall sein, dass nur einer der Gesprächspartner Audioprobleme hat und deshalb "nicht versteht" warum das Gespräch überhaupt beendet wurde. In solchen Fällen von schlechter Sprachqualität kommt es in der Regel zu einem gegenseitigen Pingpongspiel zwischen den Teilnehmern, wobei jeder den anderen mehrmals fragt: "Hallo, verstehst du mich?"

Oft ist deshalb der manuelle Neuaufbau des Sprachanrufs die einzige Lösung, was sich jedoch auch als problematisch herausstellen kann, wenn der anderen Teilnehmer noch die Leitung offenhält und gar nicht bemerkt hat, dass sein Gesprächspartner schon aufgelegt hat. Hierbei kommt es zu unnötigen Verzögerungen, wenn der Sprachanruf wieder gestartet werden soll. Ein Problem ist hierbei, dass Sprachanrufe die vermittels UDP durchgeführt werden aktuell über keinerlei Fehlerkorrekturmechanismen verfügen.

Ein manueller Neuaufbau des Sprachanrufs kann sogar ein Unfallrisiko erhöhen, wenn der Sender und/oder der Empfänger beispielsweise gerade Autofahren.

Die Patentveröffentlichungen US2017/339535 und EP3182647 sind Beispiele für den Stand der Technik.

Der vorliegenden Erfindung liegt daher die Aufgabe zu Grunde, Techniken bereitzustellen, die einen Sprachanruf mit schlechter Sprachqualität effizient vermeiden und somit die eingangs genannten Nachteile des Stands der Technik zumindest zum Teil zu beseitigen. Es ist andere alternative Aufgabe der Erfindung einen automatisierten Neuaufbau eines Sprachanrufs bei schlechter Qualität des aktuellen Sprachanrufs zu initiieren.

Die vorliegende Erfindung löst diese Aufgabe durch die Merkmale der unabhängigen Ansprüche.

Die Merkmale der im Folgenden beschriebenen verschiedenen Aspekte der Erfindung bzw. der verschiedenen Ausführungsbeispiele sind miteinander kombinierbar, sofern dies nicht explizit ausgeschlossen ist oder sich technisch zwingend ausschließt.

Erfindungsgemäß ist ein Verfahren zur Bereitstellung, Wiederherstellung und/oder Neuaufbau einer Sprachverbindung, insbesondere einer Telefonverbindung, angegeben. Die (neue) Sprachverbindung kann bevorzugt eine zufriedenstellende Sprachqualität aufweisen. Das Verfahren umfasst die folgenden Schritte, wobei eine Reihenfolge der Schritte insbesondere wie nachstehend aufgeführt sein kann:
- Messung von technischen Parametern eines VoIP Sprachanrufs zwischen einem Sender und einem Empfänger der unter Nutzung eines Kommunikationsnetzwerks durchgeführt wird, wobei die technischen Parameter einen Jitter des Anrufs und/oder einen Datenpaketverlust umfassen;
   ∘ unter dem Sender oder Empfänger ist hierbei das Nutzerendgerät zu verstehen mit dem die jeweiligen Gesprächspartner den Sprachanruf durchführen. Hierbei kann es sich um ein Smartphone, ein Tablet, ein normales Telefon, ein Computer, eine Smartwatch etc. handeln; das Kommunikationsnetz kann einem Telefonie-Anbieter und/oder einem Internetanbieter zugeordnet sein; das Kommunikationsnetz kann ein 3G, 4G, 5G, ein 6G-Netz sein - es kann sich insbesondere um ein Festnetz- oder ein Mobilfunknetzwerk handeln; die entsprechenden Messeinheiten, die eingerichtet sind Jitter und/oder Datenpaketverlust zu messen sind wahlweise dem Empfänger, dem Sender und/oder einem Server des Kommunikationsnetzwerks zugeordnet und/oder dort vorgesehen;
   ∘ der Sprachanruf wird insbesondere über UDP und Transportprotokoll Layer 4 durchgeführt;
- Übergabe der technischen Parameter an einen Sprachqualitäts-Algorithmus, ∘ der Sprachqualitäts-Algorithmus ist eingerichtet auf Grundlage dieser technischen Parameter die Sprachqualität zu bestimmen. Prinzipiell kann der Sprachqualitäts-Algorithmus hierzu als funktionaler Code oder als eine entsprechend trainierte künstliche Intelligenz realisiert sein;
- Berechnung zumindest eines Telefonie-Qualitäts-Scores TQS, der die Sprachqualität des Sprachanrufs charakterisiert mittels des Sprachqualitäts-Algorithmus, wobei die Berechnung auf den Messwerten des Jitters und/oder des Datenpaketverlusts basiert;
   ∘ der TQS kann ein Maß dafür darstellen, wie wahrscheinlich es ist, dass der Sprachanruf potenziell abbricht. Der Score kann so gewählt werden, dass ein niedrigerer Wert einer schlechteren Sprachqualität entspricht. Prinzipiell ist für den Fachmann allerdings klar, dass dies lediglich eine Konventionsfrage ist und der Score auch so gewählt werden könnte, dass ein höherer Wert einer schlechteren Sprachqualität entspricht - entsprechend würde er diese Erkenntnisse auf den nachstehend beschriebenen Schwellenwert übertragen;
   ∘ sowohl ein funktionaler Sprachqualitäts-Algorithmus als auch ein Sprachqualitäts-Algorithmus in der Form der trainierten künstlichen Intelligenz können prinzipiell drei verschiedene TQS Scores berechnen. Der erste - ohne, dass die Reihenfolge eine Bedeutung hat - kann basierend auf dem Jitter "J" berechnet werden: TQS(J), der zweite basierend auf dem Paketverlust "PL": TQS(PL) und der dritte basierend auf einer Kombination des Jitters und des Paketverlusts TQS(J, PL). Dies ermöglicht eine Flexibilität bei der Berechnung der TQS Werte und ermöglicht es zudem, dass diese Werte besser auf mögliche Use-Cases anpassbar sind. Insbesondere kann für jeden dieser drei TQS Werte ein eigener - nachstehend beschriebene - Schwellenwert festgelegt werden.
   ∘ der Sprachqualitäts-Algorithmus als künstlichen Intelligenz kann wie folgt trainiert werden. Es können verschiedene Datensätze an Messwerten des Jitters und/oder des Paketverlusts bereitgestellt werden, die jeweils mit entsprechenden TQS Scores markiert sind. Diese werden der künstlichen Intelligenz in der Trainingsphase bekannt gemacht, sodass diese nach der Trainingsphase in der Lage ist "unbekannten" Messwerten entsprechende TQS Scores zuzuordnen;
- Unterbrechung des Sprachanrufs zwischen dem Sender und dem Empfänger, falls der zumindest eine Score zumindest einen vordefinierten Schwellenwert unterschreitet und automatisierter Neuaufbau eines Sprachanrufs zwischen dem Sender und dem Empfänger.
   ∘ Die Unterbrechung betrifft sowohl den Sender als auch den Empfänger, sodass keiner die Leitung für einen erneuten Anruf blockiert;
   ∘ die Unterbrechung des Sprachanrufs und der Aufbau des neuen Sprachanrufs erfolgen insbesondere automatisiert und benötigen keine Interaktion eines Nutzers;
   ∘ Falls wie vorstehend beschrieben die Scores TQS(J, PL), TQS(J) und/oder TQS(PL) berechnet werden, kann die Unterbrechung und der automatisierter Neuaufbau schon dann getriggert werden, wenn nur einer, oder eine beliebige Kombination des Scores ihren jeweilig zugeordneten vordefinierten Schwellenwert überschreitet;

Das erfindungsgemäße Verfahren ermöglicht es also erstmals, dass automatisiert ein effizienter Neuaufbau einer Sprachverbindung vorgenommen wird, wenn die Sprachqualität zu schlecht ist bzw. wenn befürchtet wird, dass der Sprachanruf potenziell bald abbrechen würde. Hierdurch wird erreicht, dass Nutzer möglichst effizient miteinander kommunizieren können, was Wartezeiten verkürzt und - wie vorstehend erläutert - Verkehrsrisiken minimieren kann.

In einer bevorzugten Ausgestaltung der Erfindung ist das Verfahren auf einem Server eines Telefonie-Anbieters oder Kommunikationsnetzwerk-Anbieters, auf dem Sender und/oder dem Empfänger implementiert ist.

Sender und/oder Empfänger kommunizieren in einer Art und Weise miteinander, die es ihnen ermöglicht die entsprechenden Messwerte zu bestimmen. Sender und/oder Empfänger haben zudem Zugriff auf andere Messdaten, wie etwa die Stärke des Funksignals, dass dem Kommunikationsnetzwerk-Anbieters nicht ohne weiteres zur Verfügung steht. Sender und/oder Empfänger können entsprechend eingestellt sein bzw. eingestellt werden die entsprechenden Messwerte zu bestimmen. Stellt beispielsweise der Sender und/oder der Empfänger fest, dass einer der Schwellenwert unterschritten wird, kann er an das jeweils andere Gerät ein Signal zu Unterbrechung des Sprachanrufs senden, sodass das andere Gerät nicht die Leitung blockiert und selbstständig einen Neuaufbau des Sprachanrufs durchführen.

Auf der anderen Seite kann die serverseitige Lösung unabhängig von dem Sender und/oder Empfänger implementiert werden, was insbesondere auch Ressourcen des Senders und/oder des Empfängers schont, da diese nicht beständig die Messung durchführen müssen, die dem Server ohnehin vorliegen. Zudem können im Fall eines Verbindungsausfalls der Sender oder der Empfänger nicht mehr kommunizieren, dass ein Neuaufbau des Sprachanrufs durchgeführt werden soll - der Server kann hingegen immer noch in der Lage sein mit zumindest einem der Geräte zu kommunizieren.

Um Paketverlust bei VolP-Telefonie zu messen, können spezielle Netzwerküberwachungsgeräte oder -software genutzt werden, die darauf ausgelegt sind, die Qualität von VolP-Anrufen zu überwachen. Ein häufig verwendetes Gerät ist ein VolP-Qualitätsmonitor oder ein Netzwerkanalysator. Diese Geräte können den Datenverkehr überwachen und statistische Informationen über Paketverlust, Latenz, Jitter und andere wichtige Metriken liefern.

Es gibt auch spezielle VoIP-Testgeräte, die dazu verwendet werden können, die Leistung von VolP-Verbindungen zu testen, indem sie Paketverlust und andere Metriken messen. Solche Geräte werden oft von Netzwerkingenieuren und IT-Profis eingesetzt, um die Qualität von VolP-Netzwerken zu überwachen und Probleme zu diagnostizieren.

Darüber hinaus können auch Softwarelösungen wie Wireshark verwendet werden, um den Netzwerkverkehr zu analysieren und Paketverlust bei VolP-Telefonie zu identifizieren. Wireshark ist ein Open-Source-Netzwerkprotokollanalysator, der eine detaillierte Analyse des Netzwerkverkehrs ermöglicht und für verschiedene Betriebssysteme verfügbar ist.

Insbesondere können die Messwerte des Jitters wie folgt erlangt werden: konstante Messung des Jitters während des Sprachanrufs, der über UDP und das Transportprotokoll Layer 4 durchgeführt wird. Überschreitet der Jitter bestimmte Schwellenwerte in einer der beiden Richtungen (up- oder downstream) hat dies Einfluss auf den TQS(J, PL) oder den TQS(J). Eine Berechnung des Jitters kann basierend auf der Definition IETF RFC 1889 endgültig am 30. April 2024 für das RTP Protokoll durchgeführt werden. Hierzu wird das Dokument https://www.ietf.org/rfc/rfc1889.txt vollumfänglich in die Offenbarung der Erfindung aufgenommen.

In einer bevorzugten Ausführungsform wird eine Audionachricht von dem Sender und/oder dem Empfänger abgespielt die auf das Beenden des aktuellen Sprachanruf und/oder den Neuaufbau des Sprachanruf hinweist. Die Audionachricht kann insbesondere mit Hilfe des "Media Ressource Function" Service übermittelt werden.

Dies hat den Vorteil, dass sich die Nutzer der Geräte nicht "wundern", wenn der Sprachanruf plötzlich beendet wird und sie wissen wie weiter verfahren wird, nämlich, dass ein Neuaufbau stattfindet.

Bevorzugt wird die Audionachricht im Sender und/oder im Empfänger hinterlegt oder von einem Server an den Sender und/oder den Empfänger gesendet.

Ist die Audionachricht im Sender und/oder im Empfänger hinterlegt, kann diese auch abgespielt werden, wenn die Kommunikationsverbindung ausgefallen ist. Die Hinterlegung auf dem Server hat den Vorteil, dass die Geräte hierzu nicht extra eingerichtet werden müssen und das Verfahren auch auf herkömmliche Geräte, die es jetzt schon auf dem Markt gibt, angewendet werden kann.

Vorzugsweise wird eine Bestätigung von dem Sender und/oder dem Empfänger zum Beenden und/oder zum Neuaufbau der Sprachanrufs angefordert. Die Bestätigung kann insbesondere von dem Nutzer auf seinem Endgerät vorgenommen werden oder in Einstellungen spezifiziert sein.

Dies bietet den technischen Vorteil, dass nicht in jedem Fall ein Neuaufbau des Gesprächs stattfindet, falls dieser beispielsweise überhaupt nicht erwünscht ist oder ein Gespräch quasi schon beendet wurde, sodass in diesem Fall Kommunikations-Ressourcen geschont werden.

In einer bevorzugten Ausführungsform wird der automatisierte Neuaufbau verzögert bis der Sender und/oder der Empfänger ein ausreichend gutes Funksignal zur Verfügung haben. Ein ausreichend gutes Funksignal kann beispielsweise bei zwei von fünf Balken überlegen, wobei fünf Balken das bestmögliche Funksignal kennzeichnen. Ein ausreichend gutes Funksignal kann auch bei ca. 20 % des maximalen Funksignals vorliegen.

Falls der Server den Neuaufbau und das Beenden des Sprachanrufs durchführt, kann der Sender und/oder der Empfänger die Werte ihres Funksignals an den Server kommunizieren. Erst wenn die Werte ausreichend gut sind triggert der Server den Neuaufbau des Sprachanrufs. Wenn das Verfahren von dem Sender und/oder dem Empfänger ausgeführt wird "wissen die jeweiligen Endgeräte" ohnehin schon über die Funkstärke Bescheid und können diese Information verwenden, um zu entscheiden, ob ein Neuaufbau des Sprachanrufs durchgeführt werden kann. Dies hat den technischen Vorteil, dass die Wahrscheinlichkeit erhöht wird, dass der Neuaufbau eine ausreichend gute Qualität des Sprachanrufs bietet.

In einer Ausführungsform basiert der Sprachqualität-Algorithmus auf einer trainierten künstlichen Intelligenz. Eine solche, insbesondere zur Mustererkennung trainierte künstlichen Intelligenz, ist besonders gut geeignet um vorherzusagen, ob der Sprachanruf potenziell aufgrund der schlechten Qualität in nächster Zeit ausfallen würde. Der Sprachqualität-Algorithmus kann hierzu auch die TQS Werte und verschiedenen Zeitpunkten vergleichen und insbesondere eine Steigung berücksichtigen. Wenn beispielsweise der TQS Werte sehr stark abfällt, kann auch dies ein Kriterium für das Unterbrechen und den Neuaufbau der Sprachanrufs sein, selbst wenn der aktuelle TQS Wert noch über dem Schwellenwert liegen würde.

Die Messung der technischen Parameter kann in vordefinierten Zeitintervallen erfolgen. Diese vordefinierten Zeitintervalle werden so gewählt, dass sichergestellt werden kann, dass eine schlechte Qualität des Sprachanrufs rechtzeitig festgestellt wird und auf der anderen Seite Ressourcen geschont werden, da eine zu eng getaktete Messung einen erhöhten Bedarf an Rechnerleistung und Energie zur Folge hat. Die vordefinierten Zeitintervalle können bei der serverseitigen Implementierung kürzer gewählt werden als bei der Implementierung auf dem Sender/oder dem Empfänger, da beispielsweise ein Smartphone seine Energie effizient managen muss. Zweckmäßige vordefinierte Zeitintervalle können 10 Sekunden, bevorzugt 5 Sekunden betragen.

Die Zeitintervalle werden dynamisch verkürzt wenn sich die Sprachqualität des Sprachanrufs verschlechtert und/oder die Zeitintervalle werden dynamisch verlängert wenn sich die Sprachqualität des Sprachanrufs verbessert.

Dies hat den Vorteil, dass sich die Zeitintervalle auf die entsprechende "Situation" des Sprachanrufs anpassen, sodass Ressourcen effizient genutzt werden. Verschlechtert sich beispielsweise die Qualität des Sprachanrufs kann darin begründet sein, dass sich der Nutzer aus einem Funkgebiet herausbewegt. In diesem Fall ist es relativ wahrscheinlich, dass sein Funksignal in Kürze noch schlechter wird, sodass eine engmaschige Messung sinnvoll ist. Umgekehrt, ist der Sprachanruf beständig von guter Qualität - beispielsweise, weil Nutzer zu Hause über sein WLAN verbunden ist - bleibt die Qualität mit hoher Wahrscheinlichkeit dauerhaft gut, sodass das Zeitintervall verlängert werden kann. Insbesondere ist es möglich, dass der Sender, der Empfänger und/oder der Server verschiedene Zeitintervalle verwenden.

In einer Ausführungsform werden Parameter des Sprachanrufs neu gewählt, sodass die Qualität des Sprachanrufs verbessert wird.

Die Ursache der schlechten Qualität des Sprachanrufs kann in technischen Parametern des Sprachanrufs begründet sein, die veränderbar sind. Beispielsweise kann für den Neuaufbau festgelegt werden, dass sich Sender und/oder Empfänger in eine neue Basisstation einwählen, eine andere Netzwerk-Slice zugeordnet bekommen, Einstellungen einer App anders gewählt werden, die Funkleistung der Basisstation, des Sender und/Empfängers erhöht wird, und/oder die Kommunikation innerhalb des Komplikationsnetzwerks auf einem anderen Weg geroutet wird.

Gemäß einem zweiten Aspekt der Erfindung ist ein Server eines Telefonie-Anbieters angegeben, wobei der Telefonie-Anbieter zumindest abschnittsweise ein Kommunikationsnetzwerk für einen Sprachanruf zwischen dem Sender und dem Empfänger bereitstellt, wobei der Server eingerichtet ist die Schritte des vorstehend beschriebenen Verfahrens auszuführen.

Die Vorteile sind im Wesentlichen analog zu denen, die im Zusammenhang mit dem Verfahren beschrieben wurden.

Gemäß einem dritten Aspekt der Erfindung ist ein Sender angegeben, wobei der Sender eingerichtet ist die Schritte des vorstehend beschriebenen Verfahrens durchzuführen.

Die Vorteile sind im Wesentlichen analog zu denen, die im Zusammenhang mit dem Verfahren beschrieben wurden.

Gemäß einem dritten Aspekt der Erfindung ist ein Empfänger angegeben, wobei der Empfänger eingerichtet ist die Schritte des vorstehend beschriebenen Verfahrens durchzuführen.

Die Vorteile sind im Wesentlichen analog zu denen, die im Zusammenhang mit dem Verfahren beschrieben wurden.

Gemäß einem vierten Aspekt der Erfindung ist ein Computerprogramm-Produkt angegeben, wobei das Computerprogramm-Produkt auf einer Rechnereinheit implementierbar ist, wobei die Rechnereinheit vermittels des Computerprogramm-Produkts die Schritte des vorstehend beschriebenen Verfahrens ausführt.

Weitere vorteilhafte Ausgestaltungsmerkmale der vorliegenden Erfindung sind in den Patentansprüchen definiert.

Im Folgenden werden bevorzugte Ausführungsbeispiele der vorliegenden Erfindung unter Bezugnahme auf die begleitenden Figuren erläutert:

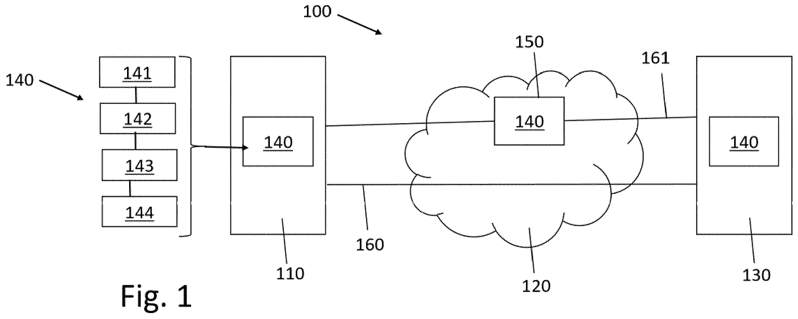

- Fig. 1:: zeigt ein Kommunikationssystem zur Bereitstellung eines Sprachanrufs mit zufriedenstellender Sprachqualität;

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

Fig. 1 zeigt ein Kommunikationssystem 100 zur Bereitstellung eines Sprachanrufs mit zufriedenstellender Sprachqualität.

Das Kommunikationssystem 100 umfasst einen Sender 110, ein Kommunikationsnetzwerk 120 und einen Empfänger 130. Der Sender 110 und schrecklich oder der Empfänger 130 sind beispielsweise Smartphones 110, 130, die von ihren jeweiligen Nutzern bedient werden, um einen Sprachanruf mittels VoIP durchzuführen. Das Kommunikationsnetzwerk 120 weist die typischen physischen Ressourcen, wie beispielsweise Basisstationen etc. auf.

Eine ausreichende Sprachqualität bzw. eine zufriedenstellende Sprachqualität des Sprachanrufs kann durch das nachstehend beschriebene erfindungsgemäße Verfahren 140 erreicht werden, wobei das Kommunikationssystem 120 eingerichtet ist, das erfindungsgemäße Verfahren 140 auszuführen.

Das Verfahren 140 umfasst zumindest die Schritte:
Schritt 141: Messung von technischen Parametern eines VolP Sprachanrufs zwischen einem Sender und einem Empfänger der vermittels eines Kommunikationsnetzwerks durchgeführt wird, wobei die technischen Parameter einen Jitter des Anrufs und/oder einen Datenpaketverlust umfassen;

Schritt 142: Übergabe der technischen Parameter an einen Sprachqualitäts-Algorithmus;

Schritt 143: Berechnung zumindest eines Telefonie-Qualitäts-Scores TQS, der die Sprachqualität des Sprachanrufs charakterisiert mittels des Sprachqualitäts-Algorithmus basierend auf den Messwerten des Jitters und/oder des Datenpaketverlusts;

Schritt 144: Unterbrechung des Sprachanrufs zwischen dem Sender und dem Empfänger, falls der zumindest eine Score zumindest einen vordefinierten Schwellenwert überschreitet und automatisierter Neuaufbau eines Sprachanrufs zwischen dem Sender und dem Empfänger;

Das Verfahren 140 ermöglicht es also den Gesprächspartnern einen Sprachanruf mit ausreichender Qualität zur Verfügung zu stellen bzw. ermöglicht es, dass die Gesprächspartner nicht manuell einen neuen Anruf tätig müssen. Das Verfahren stellt zwar nicht unbedingt in jedem Fall sicher, dass der neue Sprachanruf eine bessere Qualität als der vorherige Sprachanruf aufweist, Erfahrungen zeigen aber, dass eine schlechte Qualität eines Sprachanrufs in vielen Fällen (in etwa 9 von 10 Fällen) durch einen Neuaufbau des Sprachanrufs verbessert wird.

Das Verfahren 140 kann auf dem Sender 110, auf einem Server 150 des Kommunikationsnetzwerks 120 und/oder auf dem Empfänger 130 implementiert sein. Ist das Verfahren auf dem Sender 110 und/ oder dem Empfänger 130 implementiert kann eine Datenverbindung 160 auf direktem Weg zwischen dem Sender 110 und dem Empfänger 130 geroutet werden. Ist das Verfahren auf dem Server 150 implementiert führt eine Datenverbindung 161 durch diesen Server, sodass dieser die entsprechenden Messungen vornehmen kann und auch ein unterbrechen und einen Neuaufbau der Sprachverbindung triggern kann.

Nachstehend eine weitere mögliche Ausführung:
Bei der Implementierung des Verfahrens auf dem Sender, kann ein weiterer Anruf (Konferenz) zur selben Empfängernummer aufgebaut werden (statt wie normalerweise zu einem weiteren Teilnehmer), um diese neue Leitung statt der alten Leitung zu nehmen. Sozusagen quasi ein "Re-dial", während der aktive aber "schlechte" Anruf noch läuft. Der Empfänger hört dann das Anklopfen.

## Patentansprüche

1. Verfahren zur Bereitstellung einer Voice-Over-IP VoIP Sprachverbindung mit zufriedenstellender Sprachqualität umfassend die folgenden Schritte:
• Messung von technischen Parametern der VoIP Sprachverbindung zwischen einem Sender und einem Empfänger der vermittels eines Kommunikationsnetzwerks durchgeführt wird, wobei die technischen Parameter einen Jitter des Anrufs und einen Datenpaketverlust umfassen und wobei die Messung in vordefinierten Zeitintervallen erfolgt;
• Übergabe der technischen Parameter an einen Sprachqualitäts-Algorithmus,
• Berechnung zumindest eines Telefonie-Qualitäts-Scores TQS, der die Sprachqualität der Sprachverbindung charakterisiert mittels des Sprachqualitäts-Algorithmus basierend auf den Messwerten des Jitters und/oder des Datenpaketverlusts;
• Unterbrechung der Sprachverbindung zwischen dem Sender und dem Empfänger, falls der zumindest eine Score zumindest einen vordefinierten Schwellenwert unterschreitet, wobei die Unterbrechung sowohl den Sender als auch den Empfänger betrifft, und automatisierter Neuaufbau der Sprachverbindung zwischen dem Sender und dem Empfänger.
• wobei die Zeitintervalle der Messung dynamisch verkürzt werden, wenn sich die Sprachqualität der Sprachverbindung verschlechtert und/oder die Zeitintervalle dynamisch verlängert werden, wenn sich die Sprachqualität der Sprachverbindung verbessert.

2. Verfahren nach einem der vorhergehenden Ansprüche, wobei eine Audionachricht von dem Sender und/oder dem Empfänger abgespielt wird die auf das Beenden der aktuellen Sprachverbindung und/oder den Neuaufbau der Sprachverbindung hinweist.

3. Verfahren nach Anspruch 2, wobei die Audionachricht im Sender und/oder im Empfänger hinterlegt ist oder von einem Server an den Sender und/oder den Empfänger gesendet wird.

4. Verfahren nach einem der vorhergehenden Ansprüche, wobei eine Bestätigung von dem Sender und/oder dem Empfänger zum Beenden und/oder zum Neuaufbau der Sprachverbindungangefordert wird.

5. Verfahren nach einem der vorhergehenden Ansprüche, wobei der automatisierte Neuaufbau verzögert wird bis der Sender und/oder der Empfänger ein ausreichend gutes Funksignal zur Verfügung haben.

6. Verfahren nach einem der vorhergehenden Ansprüche, wobei der Sprachqualitäts-Algorithmus auf einer trainierten künstlichen Intelligenz basiert.

7. Verfahren nach einem der vorhergehenden Ansprüche, wobei Parameter der Sprachverbindung neu gewählt werden, sodass die Qualität der Sprachverbindung verbessert wird.

8. Server eines Telefonie-Anbieters, der zumindest abschnittsweise ein Kommunikationsnetzwerk für eine Sprachverbindung zwischen einem Sender und einem Empfänger bereitstellt, wobei der Server eingerichtet ist die Schritte des Verfahrens nach einem der Ansprüche 1 - 7 auszuführen.

9. Sender zum Durchführen eines Sprachanruf, wobei der Sender eingerichtet ist die Schritte des Verfahrens nach einem der Ansprüche 1 - 7 auszuführen.

10. Empfänger zum Durchführen eines Sprachanruf, wobei der Empfänger eingerichtet ist die Schritte des Verfahrens nach einem der Ansprüche 1 - 7 auszuführen.

11. Computerprogramm-Produkt implementierbar auf einer Rechnereinheit, wobei die Rechnereinheit vermittels des Computerprogramm-Produkts die Schritte des Verfahrens nach einem der Ansprüche 1 - 7 ausführt.

## Claims

1. Method for providing a voice-over-IP VoIP voice connection having satisfactory voice quality, comprising the following steps:
• measuring technical parameters of the VoIP voice connection, which is made using a communication network, between a transmitter and a receiver, the technical parameters including a jitter of the call and a data packet loss, and the measurement being carried out in predefined time intervals;
• transferring the technical parameters to a voice quality algorithm,
• calculating at least one telephony quality score TQS, which characterizes the voice quality of the voice connection, by means of the voice quality algorithm on the basis of the measured values of the jitter and/or the data packet loss;
• interrupting the voice connection between the transmitter and the receiver if the at least one score falls below at least one predefined threshold value, the interruption affecting both the transmitter and the receiver, and reestablishing the voice connection between the transmitter and the receiver by automated means,
• the time intervals for the measurement being dynamically shortened if the voice quality of the voice connection deteriorates and/or the time intervals being dynamically extended if the voice quality of the voice connection improves.

2. Method according to one of the preceding claims, wherein an audio message that indicates the termination of the current voice connection and/or the reestablishment of the voice connection is played by the transmitter and/or the receiver.

3. Method according to Claim 2, wherein the audio message is stored in the transmitter and/or in the receiver or is transmitted to the transmitter and/or the receiver by a server.

4. Method according to one of the preceding claims, wherein an acknowledgment is requested from the transmitter and/or from the receiver to terminate and/or reestablish the voice connection.

5. Method according to one of the preceding claims, wherein automated reestablishment is delayed until the transmitter and/or the receiver have a sufficiently good radio signal available.

6. Method according to one of the preceding claims, wherein the voice quality algorithm is based on trained artificial intelligence.

7. Method according to one of the preceding claims, wherein parameters of the voice connection are reselected so that the quality of the voice connection is improved.

8. Server of a telephony provider, at least portions of which provide a communication network for a voice connection between a transmitter and a receiver, the server being configured to perform the steps of the method according to one of Claims 1 - 7.

9. Transmitter for making a voice call, the transmitter being configured to perform the steps of the method according to one of Claims 1 - 7.

10. Receiver for making a voice call, the receiver being configured to perform the steps of the method according to one of Claims 1 - 7.

11. Computer program product implementable on a computer unit, the computer unit using the computer program product to perform the steps of the method according to one of Claims 1 - 7.

## Revendications

1. Procédé de fourniture d'une connexion vocale voix sur IP VoIP avec une qualité vocale satisfaisante, comprenant les étapes suivantes :
• mesure de paramètres techniques de la connexion vocale VoIP entre un émetteur et un récepteur qui est effectuée au moyen d'un réseau de communication, les paramètres techniques comprenant une gigue de l'appel et une perte de paquets de données et la mesure étant effectuée à des intervalles de temps prédéfinis ;
• transfert des paramètres techniques à un algorithme de qualité vocale,
• calcul d'au moins un score de qualité téléphonique TQS qui caractérise la qualité vocale de la connexion vocale au moyen de l'algorithme de qualité vocale sur la base des valeurs mesurées de la gigue et/ou de la perte de paquets de données ;
• interruption de la connexion vocale entre l'émetteur et le récepteur dans le cas où le score devient inférieur à au moins une valeur de seuil prédéfinie, l'interruption concernant à la fois l'émetteur et le récepteur, et rétablissement automatique de la connexion vocale entre l'émetteur et le récepteur,
• les intervalles de temps de la mesure étant raccourcis dynamiquement lorsque la qualité vocale de la connexion vocale se détériore et/ou les intervalles de temps étant allongés dynamiquement lorsque la qualité vocale de la connexion vocale s'améliore.

2. Procédé selon l'une des revendications précédentes, un message audio étant reproduit par l'émetteur et/ou le récepteur, qui notifie de la fin de la connexion vocale actuelle et/ou du rétablissement de la connexion vocale.

3. Procédé selon la revendication 2, le message audio étant stocké dans l'émetteur et/ou dans le récepteur ou étant envoyé par un serveur à l'émetteur et/ou au récepteur.

4. Procédé selon l'une des revendications précédentes, une confirmation étant demandée à l'émetteur et/ou au récepteur pour la fin et/ou le rétablissement de la connexion vocale.

5. Procédé selon l'une des revendications précédentes, le rétablissement automatisé étant retardé jusqu'à ce que l'émetteur et/ou le récepteur disposent d'un signal radio suffisamment bon.

6. Procédé selon l'une des revendications précédentes, l'algorithme de qualité vocale étant basé sur une intelligence artificielle entraînée.

7. Procédé selon l'une des revendications précédentes, les paramètres de la connexion vocale étant resélectionnés, de telle sorte que la qualité de la connexion vocale est améliorée.

8. Serveur d'un fournisseur de téléphonie qui fournit, au moins par portions, un réseau de communication pour une connexion vocale entre un émetteur et un récepteur, le serveur étant conçu pour exécuter les étapes du procédé selon l'une des revendications 1 à 7.

9. Émetteur destiné à effectuer un appel vocal, l'émetteur étant conçu pour exécuter les étapes du procédé selon l'une des revendications 1 à 7.

10. Récepteur destiné à effectuer un appel vocal, le récepteur étant conçu pour exécuter les étapes du procédé selon l'une des revendications 1 à 7.

11. Produit de programme informatique pouvant être mis en œuvre sur une unité de calcul, l'unité de calcul exécutant les étapes du procédé selon l'une des revendications 1 à 7 au moyen du produit de programme informatique.
